# EUROPEAN PATENT APPLICATION

(11) **EP 1 527 989 A2**
(43) Date of publication of application: **04.05.2005**
(21) Application number: 04025196.9
(22) Date of filing: 22.10.2004
(51) Int. Cl.: B62M 25/04

(54) **Bicycle component with positioning mechanism**

(30) Priority: 31.10.2003 US 697989
(71) Applicant: Shimano Inc., Osaka 590-8577 (JP)
(72) Inventor: Tezuka, Toshio, Osaka (JP)
(74) Representative: Hofmann, Harald

(57) **Abstract**

A bicycle component is provided that includes an operator actuating member and a positioning mechanism with a buffering member. The operator actuating member is configured and arranged to be manually operated. The positioning mechanism is mechanically coupled to the operator actuating member. The positioning mechanism includes first and second members arranged and configured to engage each other in response to manual operation of the operator actuating member. The buffering member is mounted to at least one of the first and second members in an area such that the buffering member is contacted between first and second engagement surfaces of the first and second members, respectively. The bicycle component is preferably a bicycle shift operating device or a bicycle derailleur.

## Description

### BACKGROUND OF THE INVENTION

This invention generally relates to a bicycle component with a positioning mechanism. More specifically, the present invention relates to a bicycle component with a positioning mechanism, which includes a buffering member mounted between parts of the positioning mechanism to provide a shock absorbing and sound reducing cushion between the parts of the positioning mechanism.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One part of the bicycle that has been extensively redesigned is the bicycle transmission.

A bicycle transmission typically includes several components. Specifically, a bicycle transmission typically includes front and rear shifting devices, front and rear derailleurs, front and rear sprockets and a chain. The front and rear shifting devices are designed to operate the front and rear derailleurs to move the chain laterally over the front and rear sprockets, respectively. The front and rear sprockets are typically coupled to the front crank and the rear wheel, respectively, such that pedaling force from the rider is transferred to the rear wheel via the chain.

Bicycle shifting devices have been utilized that include one or more levers that are pivoted to wind and unwind inner wires of control cables. Alternatively, rotating hand grips have also been utilized to wind and unwind the inner wires of the control cables. Each derailleur typically includes a fixing member coupled to the bicycle frame, a linkage assembly and a movable member with a chain guide. Operating the respective shifting device typically actuates the control cables to move the movable member and chain guide of the respective derailleur. Typically, one shifting device controls one derailleur via one of the control cables, while another shifting device controls the other derailleur via the other control cable. The control cables are typically coupled between the shifting devices and the derailleurs to laterally shift the chain over the sprockets upon winding or unwinding the respective control cables

These prior components (i.e., shifting devices and derailleurs) can be relatively complicated and expensive to manufacture and assemble. Additionally, these prior components are sometimes relatively heavy and/or cumbersome. Moreover, these typical components are not always operated easily and reliably. Finally, these prior devices often utilize various engagement members such as gears or links that contact each other abruptly and make audible sounds.

In view of the above, it will be apparent to those skilled in the art from this disclosure that there exists a need for an improved bicycle component with a positioning mechanism that overcomes the above mentioned problems in the prior art. This invention addresses this need in the art as well as other needs, which will become apparent to those skilled in the art from this disclosure.

### SUMMARY OF THE INVENTION

One object of the present invention is to provide a bicycle component that is relatively simple and inexpensive to manufacture and assemble.

Another object of the present invention is to provide a bicycle component that operates easily and reliably, and which is relatively lightweight.

Still another object of the present invention is to provide a bicycle component that reduces and/or eliminates abrupt contact between various members, and which reduces audible noise caused by such contact.

The foregoing objects can basically be attained by providing a bicycle component comprising an operator actuating member and a positioning mechanism. The operator actuating member is configured and arranged to be manually operated. The positioning mechanism is mechanically coupled to the operator actuating member. The positioning mechanism includes first and second members arranged and configured to engage each other in response to manual operation of the operator actuating member, and a buffering member mounted to at least one the first and second members in an area such that the buffering member is contacted between first and second engagement surfaces of the first and second members, respectively.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle with bicycle components (i.e., front and rear shift operating devices and a front derailleur) coupled thereto in accordance with the present invention;

Figure 2 is an enlarged perspective view of the front shift operating device in accordance with the present invention;

Figure 3 is an enlarged perspective view of the rear shift operating device in accordance with the present invention;

Figure 4 is an exploded perspective view of the front shift operating device illustrated in Figure 2;

Figure 5 is an exploded perspective view of the rear shift operating device illustrated in Figure 3;

Figure 6 is a partial, diagrammatic cross-sectional view of the front shift operating device illustrated in Figures 2 and 4;

Figure 7 is a bottom plan view of certain parts of the front shift operating device illustrated in Figures 2, 4 and 6 showing the first shift operating member in a normal rest position in solid lines with the ratchet member, pawl member and locking member shown in broken lines for the purpose of illustration;

Figure 8 is a top plan view of the pawl member, ratchet member, locking member and buffering member (i.e., a positioning mechanism) of the front shift operating device illustrated in Figures 2, 4 and 6, showing the engagement and relationship between these members in a first shift position;

Figure 9 is a top plan view of the pawl member, ratchet member, locking member and buffering member of the front shift operating device illustrated in Figures 2, 4 and 6, showing the engagement/relationship between these members in a second shift position;

Figure 10 is a top plan view of the pawl member, ratchet member, locking member and buffering member of the front shift operating device illustrated in Figures 2, 4 and 6, showing the engagement/relationship between these members in a third shift position;

Figure 11 is a bottom plan view of certain parts of the front shift operating device illustrated in Figures 2, 4 and 6 showing the second shift operating member in a normal rest position in solid lines, and in a shift position in broken lines for the purpose of illustration;

Figure 12 is a bottom plan view of certain parts of the front shift operating device illustrated in Figures 2, 4 and 6 showing the first shift operating member in a normal rest position in solid lines, and in a shift position in broken lines for the purpose of illustration;

Figure 13 is a bottom plan view of certain parts of the front shift operating device illustrated in Figures 2, 4 and 6 with the second shift operating member in a normal rest position and with the ratchet member, pawl member and locking member shown in broken lines in shifted positions in order to illustrate operation of the front shift operating device;

Figure 14 is a bottom plan view of certain parts of the front shift operating device illustrated in Figures 2, 4 and 6 with the second shift operating member in a shift position and with the ratchet member, pawl member and locking member shown in broken lines in intermediate positions in order to illustrate operation of the front shift operating device;

Figure 15 is a bottom plan view of certain parts of the front shift operating device illustrated in Figures 2, 4 and 6 with the second shift operating member moved back to the normal rest position and with the ratchet member, pawl member and locking member shown in broken lines after being shifted in order to illustrate operation of the front shift operating device;

Figure 16 is a bottom plan view of certain parts of the front shift operating device illustrated in Figures 2, 4 and 6 with the first shift operating member in a normal rest position and with the ratchet member, pawl member and locking member shown in broken lines in order to illustrate operation of the front shift operating device;

Figure 17 is a bottom plan view of certain parts of the front shift operating device illustrated in Figures 2, 4 and 6 with the first shift operating member in a shift position and with the ratchet member, pawl member and locking member shown in broken lines in shifted positions in order to illustrate operation of the front shift operating device;

Figure 18 is a bottom plan view of certain parts of the front shift operating device illustrated in Figures 2, 4 and 6 with the first shift operating member moved back to the normal rest position and with the ratchet member, pawl member and locking member shown in broken lines after being shifted in order to illustrate operation of the front shift operating device;

Figure 19 is a perspective view of the front derailleur coupled to the seat post portion of the bicycle frame in accordance with the present invention;

Figure 20 is an exploded, partial perspective view of the front derailleur illustrated in Figure 19;

Figure 21 is a partial rear elevational view of the front derailleur illustrated in Figures 19 and 20, with the front derailleur in its low gear position;

Figure 22 is a partial side elevational view of selected parts of the front derailleur illustrated in Figures 19-21, with the front derailleur in its high gear position;

Figure 23 is an enlarged partial rear elevational view of one of the links of the front derailleur illustrated in Figures 19-22;

Figure 24 is a top plan view of a pawl member, ratchet member, locking member and buffering member (i.e., a positioning mechanism) in accordance with a second embodiment of the present invention; and

Figure 25 is a top plan view of a pawl member, ratchet member, locking member and buffering member (i.e., a positioning mechanism) in accordance with a third embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

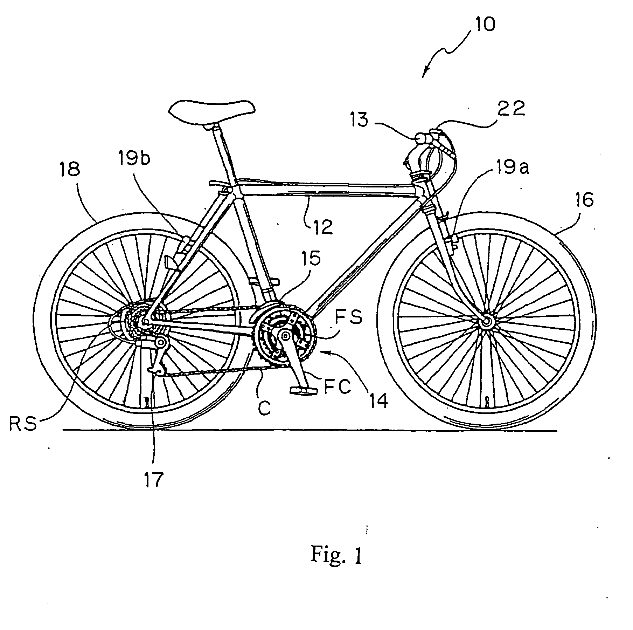

Referring initially to Figures 1-5, a bicycle 10 is illustrated with a front (first) shift operating device 20 and a rear (second) shift operating device 22 is illustrated in accordance with a preferred embodiment of the present invention. These bicycle components 20 and 22 (i.e., the front and rear shift operating devices) are provided with positioning mechanisms that utilize a special dampening feature of the present invention, as described below. Bicycle 10 basically includes a frame 12, a drive train or transmission 14, a front wheel 16 and a rear wheel 18. The frame 12 includes a handlebar 13 pivotally coupled thereto. Specifically, the handlebar 13 is fixedly coupled to the front fork of the frame 12 to steer the bicycle 10 via the front wheel 16.

The drive train or transmission 14 includes a front derailleur 15, a rear derailleur 17, a chain C, a plurality of rear sprockets RS coupled to the rear wheel 18 and a front crank FC with a plurality of front sprockets FS coupled thereto. The front and rear derailleurs 15 and 17 are coupled to the frame 12 to move/shift the chain C laterally between the various sprockets FS and RS in a relatively conventional manner. The rear sprockets RS are coupled to the rear wheel 18 via a free wheel to selectively rotate the rear wheel 18 via the chain C in order to propel the bicycle 10 in a conventional manner. The bicycle component 15 (i.e., the front derailleur) is also preferably provided with a positioning mechanism that utilizes a special dampening feature of the present invention, as described below.

The front shift operating device 20 is operatively coupled to the front derailleur 15 via a front (first) Bowden control cable 21 in order to shift the front derailleur 15 laterally over the front sprockets FS in a relatively conventional manner. Similarly, the rear shift operating device 22 is operatively coupled to the rear derailleur 17 via a rear (second) Bowden control cable 23 to shift the rear derailleur 17 laterally over the rear sprockets RS in a relatively conventional manner. The front and rear control cables 21 and 23 are identical except for their lengths, and are basically conventional. In other words, each of the control cables 21 and 23 basically includes an inner wire slidably received within an outer casing.

A front brake 19a is coupled to the front fork of the bicycle frame 12, while a rear brake 19b is coupled to the rear triangle of the bicycle frame 12. The front and rear brakes 19a and 19b selectively apply a friction force to the front and rear rims of the front and rear wheels 16 and 18 to selectively stop the rotation of the front and rear wheels 16 and 18, respectively, in a conventional manner.

The various parts of the bicycle 10 are conventional, except for the front derailleur 15, the front shift operating device 20 and the rear shift operating device 22, as discussed below. Thus, the remaining parts of the bicycle 10 will not be discussed or illustrated in detail herein, except as they relate to these bicycle components 15, 20 and 22. Moreover, it will be apparent to those skilled in the art from this disclosure that various modifications can be made to the various components or parts of the bicycle 10 without departing from the scope of the present invention.

As mentioned above, the front shift operating device 20 is operatively coupled to the front derailleur 15 via the front control cable 21, while the rear shift operating device 22 is operatively coupled to the rear derailleur 17 via the rear control cable 23. In the illustrated embodiment, each of the front and rear shift operating devices 20 and 22 includes an integrated brake operating device, as discussed below in more detail. However, it will be apparent to those skilled in the art from this disclosure that the shift operating devices 20 and 22 could be designed to be separate from the brake operating devices.

The front and rear shift operating devices 20 and 22 of the present invention are constructed in accordance with U.S. patent application No. 10/041,557, filed on January 10, 2002. Thus, the front and rear shift operating devices 20 and 22 of the present invention operate in accordance with U.S. patent application No. 10/041,557, except that the front and rear shift operating devices 20 and 22 of the present invention are provided with positioning mechanisms that utilize a special dampening feature of the present invention, as described below. Accordingly, the front and rear shift operating devices 20 and 22 of the present invention will not be discussed and/or illustrated in detail herein, except as related to the positioning mechanisms with the dampening feature in accordance with the present invention. In other words, it will be apparent to those skilled in the art from this disclosure that the shift operating mechanisms 20 and 22 of the present invention are identical to those disclosed and illustrated in U.S. patent application No. 10/041,557, except as explained and illustrated herein.

### FRONT SHIFT OPERATING DEVICE

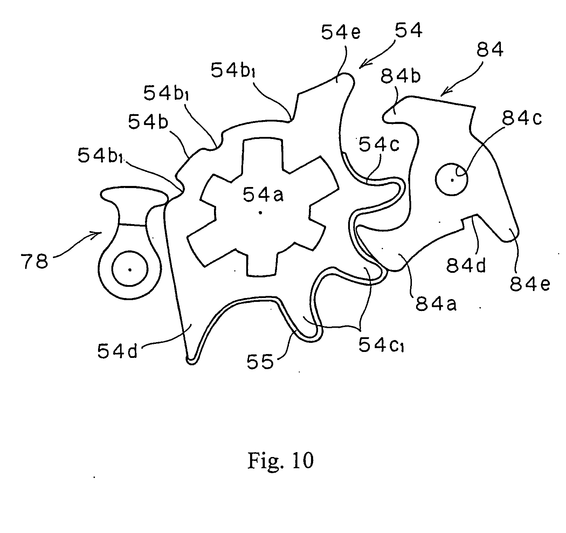

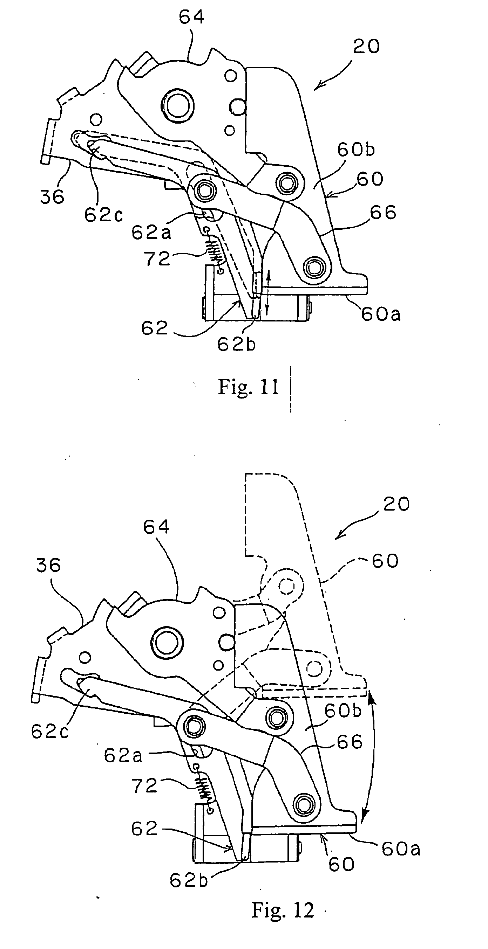

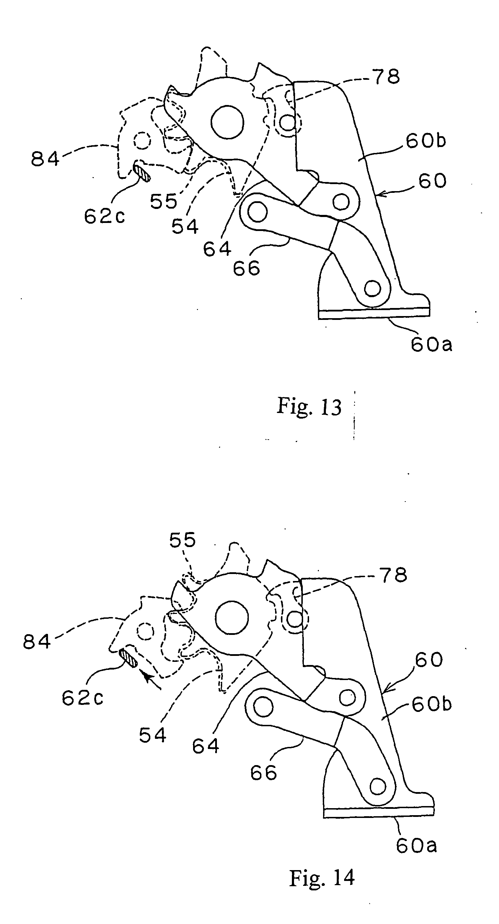

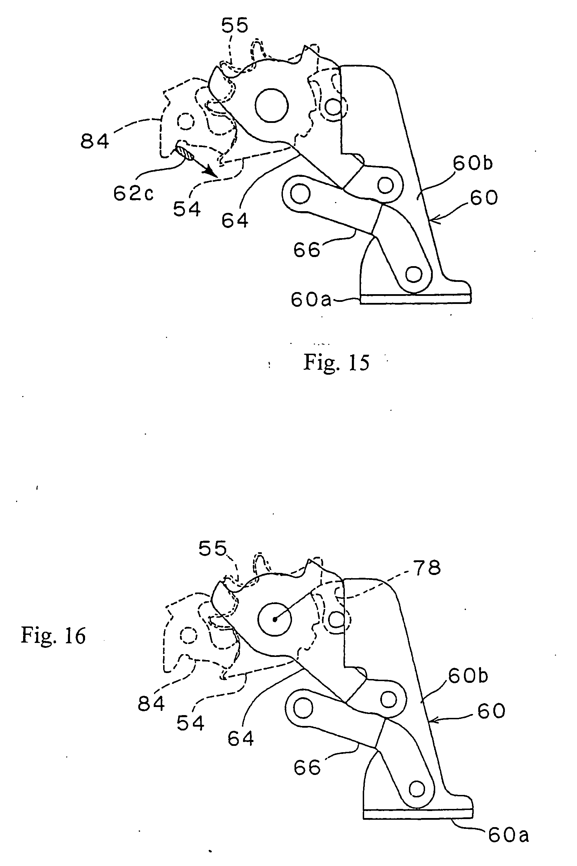

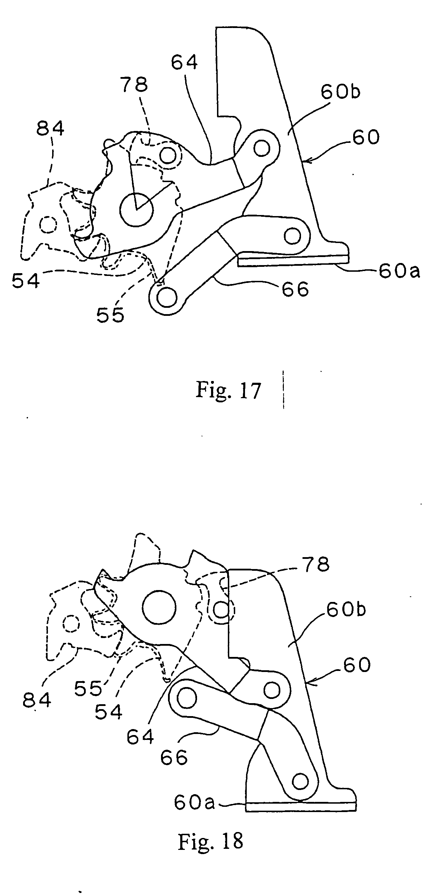

Referring now to Figures 1, 2, 4 and 6-18, the front shift operating device 20 will now be discussed in more detail. The front shift operating device 20 basically includes a mounting assembly 24, a winding mechanism 26, an operating mechanism 28 and a retaining mechanism 30 coupled together to shift the front derailleur 15 and the chain C of the drive train 14 between the front sprockets FS. In the illustrated embodiment, the front crank FC preferably has at least three front sprockets FS coupled thereto. The front shift operating device 20 preferably has a number of shift positions that corresponds to the number of shift positions of the front derailleur 15. Of course, it will be apparent to those skilled in the art from this disclosure that the front derailleur 15 and the front shift operating device 20 could be designed with a different number of shift positions if needed and/or desired.

The winding mechanism 26, the operating mechanism 28 and the retaining mechanism 30 are coupled to the mounting assembly 24. The winding mechanism 26 is controlled by the operating mechanism 28 and the retaining mechanism 30 to selectively maintain the front derailleur 15 in one of a plurality of shift positions via the control cable 21. More specifically, the operating mechanism 28 and the retaining mechanism 30 control rotation of the winding mechanism 26 to selectively retain the winding mechanism 26 in one of a plurality of shift positions. Thus, the inner wire of the control cable 21 and the front derailleur 15 are also selectively retained in a plurality of shift positions. The inner wire of the front control cable 21 is coupled to the winding mechanism 26 such that rotation of the winding mechanism 26 takes-up or lets-out the inner wire of the control cable 21 to actuate/move/shift the front derailleur 15 between the front sprockets FS.

The mounting assembly 24 basically includes a plurality of fixed members coupled together to form a shift operating device housing that supports the winding mechanism 26, the operating mechanism 28 and the retaining mechanism 30. More specifically, the mounting assembly 24 basically includes a main mounting portion 32, a base plate 34, an intermediate plate 36 and a lever retaining plate 38. The base plate 34, the intermediate plate 36 and the lever retaining plate 38 are basically fixedly coupled to the main mounting portion 32 by a main fixing bolt 40 (first pivot axle) and a secondary fixing bolt 42 (second pivot axle) to form the shift operating device housing. Various other parts of the front shift operating device 20 (i.e., parts of the winding mechanism 26, operating mechanism 28 and retaining mechanism 30) are either movably or non-movably coupled to the mounting assembly 24, as discussed below in more detail.

The base plate 34, the intermediate plate 36 and the retaining plate 38 are preferably fixedly coupled to the main mounting portion 32 via the fixing bolts 40 and 42 in a spaced arrangement to accommodate parts of the winding mechanism 26, operating mechanism 28 and retaining mechanism 30 therebetween. A cover 44 and indicating mechanism 46 are also preferably fixedly coupled to the main mounting portion 32. The cover 44 and the indicating mechanism 46 are relatively conventional. Thus, the cover 44 and the indicating mechanism 46 will not be discussed and/or illustrated in detail herein. Moreover, the cover 44 and the indicating mechanism 46 are omitted from some Figures for the purpose of clarity. In any event, the indicating mechanism 46 is preferably operatively coupled with the shift operating device 20 to indicate the various shift positions in a conventional manner.

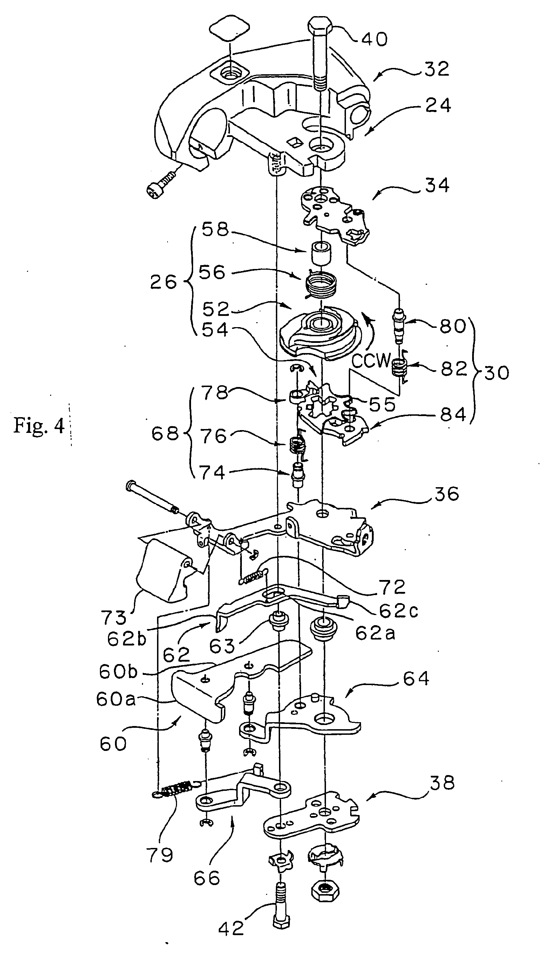

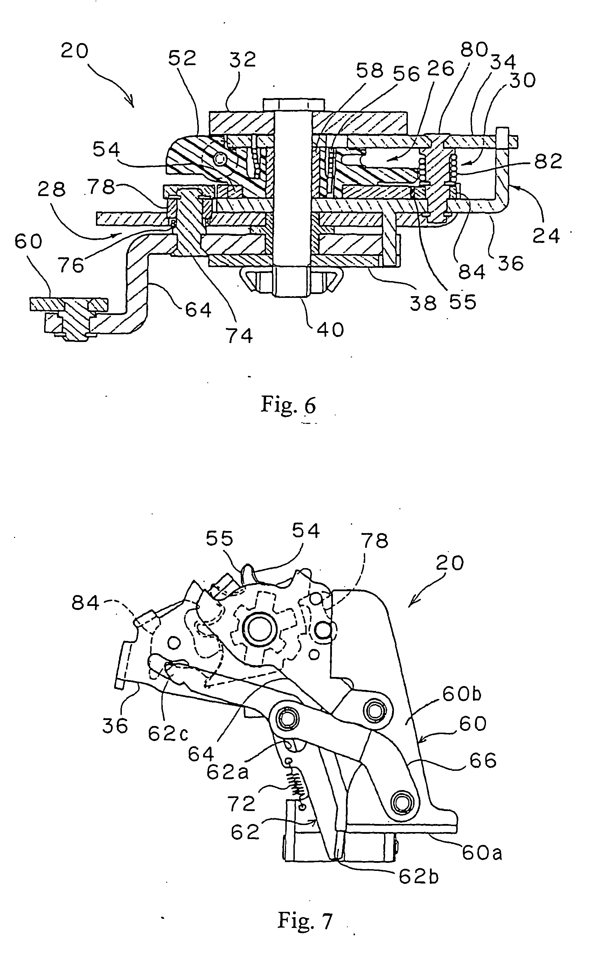

As seen in Figures 4 and 6, the base plate 34 is located between the main mounting portion 32 and the intermediate plate 36. The intermediate plate 36 is located between the base plate 34 and the lever retaining plate 38. The lever retaining plate 38 is located on an opposite side of the intermediate plate 36 from the base plate 34. Thus, the lever retaining plate 38 is located furthest from the main mounting portion 32. The intermediate plate 36 is fixedly and non-rotatably coupled to the main mounting portion 32 via the main fixing bolt 40 and the secondary fixing bolt 42. The lever retaining plate 38 is fixedly and non-rotatably coupled to the intermediate plate 36 and the main mounting portion 32 via the fixing bolts 40 and 42.

The retaining mechanism 30 is coupled to both the base plate 34 and the intermediate plate 36 to prevent rotation of the base plate 34 relative to the intermediate plate 36 and the main mounting portion 32. Moreover, a portion of the intermediate plate 36 extends partially through a T-shaped opening of the base plate 34 to prevent rotation of the base plate 34, and acts as a spacer as also discussed below. Due to the above arrangement, the lever retaining plate 38, the intermediate plate 36, the base plate 34 and the main mounting portion 32 are fixedly and non-rotatably coupled together to form the housing or mounting assembly 24.

Referring to Figures 4 and 6-18, the winding mechanism 26 will now be discussed in more detail. The winding mechanism 26 is mounted on the main fixing bolt 40 between the base plate 34 and the intermediate plate 36 of the mounting assembly 24. The winding mechanism 26 basically includes a cable winding member 52, a ratchet member 54, a main biasing member 56 and a unit spacer 58. In the illustrated embodiment, the winding member 52 and the ratchet member 54 are preferably separate members that are non-rotatably coupled together. The main biasing member 56 is preferably a torsion spring that normally biases the winding member 52 and the ratchet member 54 in a predetermined rotational direction, e.g., the counter-clockwise direction CCW as seen in Figure 4. The winding mechanism 26 is operatively coupled to the operating mechanism 28 and the retaining mechanism 30 to selectively retain the winding member 52 in each of a plurality of shift positions.

The winding member 52 is preferably a step-shaped member integrally formed as a one-piece unitary member. Moreover, the winding member 52 is preferably constructed of a lightweight rigid material such as hard plastic. The winding member 52 is pivotally coupled to the mounting assembly 24 for rotation about the main fixing bolt 40. The ratchet member 54 is preferably non-rotatably coupled to the winding member 52 and is located between the winding member 52 and the intermediate plate 36. Thus, the ratchet member 54 rotates with the winding member 52. As explained below, the rotational movement of the winding member 52 is controlled by the ratchet member 52. The winding member 52 is configured to receive the inner wire of the control cable 21.

The ratchet member 54 is preferably a thin flat member. Preferably, the ratchet member 54 is constructed of a lightweight rigid material such as sheet metal. The ratchet member 54 basically includes a splined central opening 54a, an outer operating surface 54b and an outer positioning surface 54c. The splined opening 54a is configured to receive a mating projection of the winding member 52 to non-rotatably couple the ratchet member 54 to the winding member 52 in a predetermined orientation. Thus, the winding member 52 rotates with the ratchet member 54 as if they were a single piece.

The operating surface 54b is configured to engage a portion of the operating mechanism 28, which is discussed below. More specifically, the operating surface 54b includes a plurality (three) of grooves 54b₁ designed to selectively engage a portion of the operating mechanism 28. The positioning surface 54c is configured to engage a portion of the retaining mechanism 30 (which is also discussed below) to selectively hold and retain the ratchet member 54 and the winding member 52 in one of the plurality of shift positions. More specifically, the positioning surface 54c includes a plurality (three) of projections or teeth 54c₁, which engage a portion of the retaining mechanism 30. The ratchet member 54 also preferably includes a pair of stops 54d and 54e. Specifically, the stop 54d is a rest stop while the stop 54e is a fully shifted stop. The stops 54d and 54e selectively engage portions of the retaining mechanism 30 to control movements of the winding member 52 and the ratchet member 54.

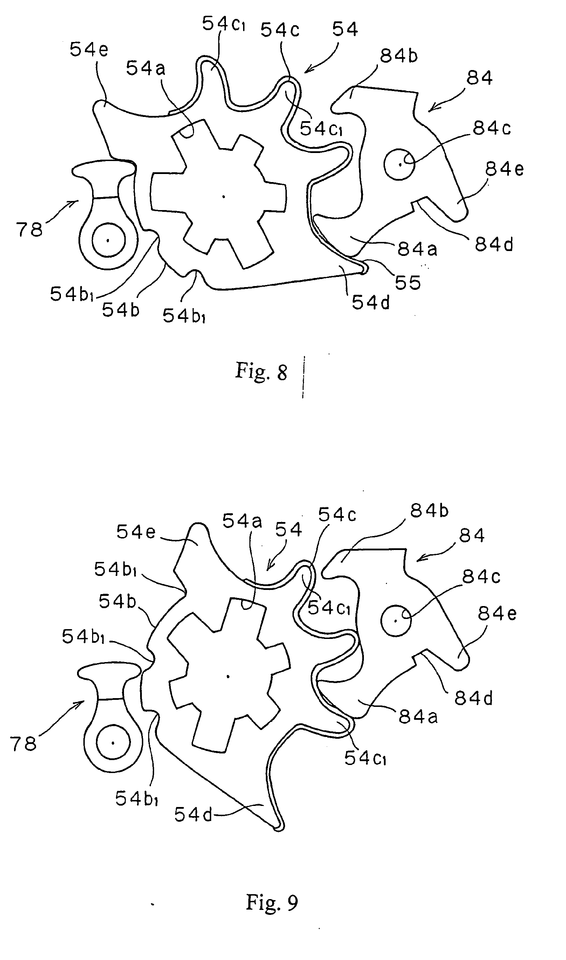

In this embodiment, the ratchet member 54 has a somewhat compressible, resilient coating 55 applied to the positioning surface 54c, as best seen in Figures 8-10. The resilient coating 55 is preferably adhesively attached or bonded to the positioning surface 54c to prevent direct contact between the ratchet member 54 and the retaining mechanism 30, as explained below. The coating 55 preferably includes an elastomeric material that is not only a shock absorbing material, but also a sound deadening material. Such materials are well known. In other words, the resilient coating 55 eliminates/reduces abrupt, direct contact (i.e., absorbs shock) between members of the front shift operating device 20, and thus, eliminates/reduces audible sounds (such as a "clicking" sound at each shift position) caused by such direct contact, as seen in Figures 8-10 because the coating 55 is squeezed between the various members. Of course, it will be apparent to those skilled in the art from this disclosure that other parts of the front shift operating device 20 could also be provided with a resilient coating and/or member as needed and/or desired.

As best seen in Figure 4, the biasing member 56 is preferably a torsion spring that is arranged to apply an urging force on the winding member 52 and the ratchet member 54 to rotate about the main fixing bolt 40. The biasing member (spring) 56 has one end coupled to the base plate 34, while the other end is coupled to the winding member 52. The unit spacer 58 is a tubular member constructed of lightweight rigid material with one end contacting the lower surface of the base plate 34 and the other end contacting the intermediate plate 36. The spring 56 is configured to normally bias the winding member 52 in a counter-clockwise direction CCW as viewed from above in Figure 4.

The operating mechanism 28 moves the winding member 52 via the ratchet member 54 in a clockwise direction against the urging force of the main biasing member 56. More specifically, the operating mechanism 28 preferably moves the winding member 52 to one of three predetermined shift positions, as discussed below. The retaining mechanism 30 selectively retains the winding member 52 and the ratchet member 54 in each of the three shift positions, as also discussed below.

Referring now to Figures 4, 6-10 and 13-18, the operating mechanism 28 will now be discussed in more detail. The operating mechanism 28 basically includes a first operating member 60 (first operator actuating member), a second operating member 62 (second operator actuating member), an operating link 64 and a follower link 66. The first and second operating members 60 and 62 are configured and arranged to be manually operated (i.e., directly or indirectly by the rider's thumb or finger). The first operating member 60 together with the operating link 64, the follower link 66 and the mounting assembly 24 form a four-bar linkage that controls movement of the first operating member 60. More specifically, the first operating member 60 is pivotally coupled to both the operating link 64 and the follower link 66. The operating link 64 is pivotally coupled to the main fixing bolt 40, while the follower link 66 is pivotally coupled to the secondary fixing bolt 42.

The operating link 64 (first operator actuating member) preferably has a pawl mechanism 68 operatively, mechanically coupled thereto. The pawl mechanism 68 is configured to engage the operating surface 54b of the ratchet member 54 when the first operating member 60 is pushed or moved by the rider from the normal rest position to the shift position. Thus, when the first operating member 60 is moved to a shift position, the operating link 64 is also moved such that the pawl mechanism 68 rotates the ratchet member 54 one shift position against the urging force of the biasing member 56. Thus, the winding member 52 is also rotated to pull the inner wire of the shift cable 21 and shift the front derailleur 15 one shift position.

When the first operating member 60 moves back to the normal rest position, the pawl mechanism 68 engages the intermediate plate 36 to disengage the pawl mechanism from the ratchet member 54. However, the retaining mechanism 30 engages the ratchet member 54 (i.e., contacts the resilient coating 55 applied to the ratchet member 54) to hold the winding member 52 and the ratchet member 54 in the new shift position against the urging force of the spring 56. In the illustrated embodiment, movement of the first operating member 60 causes only one shift of the winding member 52 from one shift position to the next adjacent shift position in one rotational direction.

The second operating member 62 (second operator actuating member) is operatively, mechanically coupled to the retaining mechanism 30 to selectively release the ratchet member 54 and the winding member 52. In other words, the rider pushes or moves the second operating member 62 to disengage the retaining mechanism 30 from the ratchet member 54, which allows the winding member 52 and the ratchet member 54 to rotate under the urging force of the spring 56. The retaining mechanism 30 is configured and arranged so that the winding member 52 and the ratchet member 54 rotate only one shift position for each push of the second operating member 62. In other words, the ratchet member 54 engages the retaining mechanism 30 after rotating one shift position. Thus, in the illustrated embodiment, movement of the second operating member 62 causes only one shift of the winding member 52 from one shift position to the next adjacent shift position in a rotational direction opposite to the rotational direction caused by moving the first operating member 60.

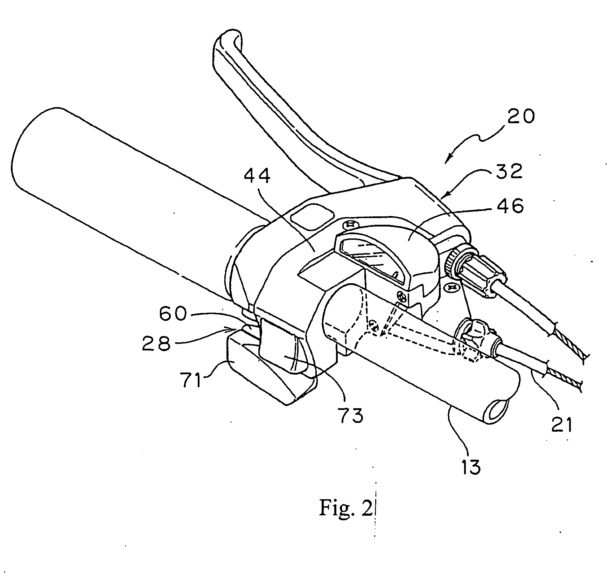

As best seen in Figures 4, 7 and 11-18, the first operating member 60 is a thin flat member. The first operating member 60 is preferably constructed of lightweight rigid material such as deformed sheet metal. The first operating member 60 basically includes an actuating portion 60a and a link portion 60b. The link portion 60b is preferably perpendicular to the actuating portion 60a. The link portion 60b includes a pair of holes that are configured to receive the upper ends of a pair of pivot pins to pivotally couple the operating link 64and the follower link 66 thereto, respectively. The actuating portion 60a can have a button 71 coupled thereto as seen in Figure 2, and is arranged to be actuated or pushed by a thumb or finger of the rider.

The second operating member 62 is also preferably a thin flat member constructed of lightweight rigid material such as deformed sheet metal. The second operating member 62 is slidably and pivotally mounted on the secondary fixing bolt 42. More specifically, the second operating member 62 is pivotally and slidably mounted on a spacer 63 that is mounted on the second fixing bolt 42 between the second operating member 62 and the follower link 66.

The second operating member 62 basically includes an elongated opening 62a, an actuating flange 62b and a release flange 62c. The elongated opening 62a has an upper end of the spacer 63 received therein. The release flange 62c is received in a guide opening of the intermediate plate 36 to control movement of the second operating member 62 together with the spacer 63, which is fixed. The second operating member 62 is preferably actuated by a tap lever 73 that is pivotally coupled to mounting flanges of the intermediate plate 36. The tap lever 73 is operatively coupled to the actuating flange 62b such that when the rider pushes the tap lever 73 with a thumb or finger, the second operating member 62 moves.

The pawl mechanism 68 basically includes a pawl pivot pin 74, a pawl spring 76 and a pawl member or winding pawl 78. The pawl pivot pin 74 has a lower end mounted to the operating link 64. Thus, movement of the first operating member 60 causes the operating pawl mechanism 68 to move via the operating link 64. The pawl member 78 is mounted on the upper end of the pawl pivot pin 74 with the pawl spring 76 normally biasing the pawl member 78 relative to the operating link 64. Specifically, the pawl spring 76 has an upper end coupled to the pawl member 78, a lower end coupled to the operating link 64 and a coiled portion surrounding the pawl pivot pin 74. The operating link 64 is configured to assist in controlling movement of the pawl member 78.

The pawl member 78 is configured to selectively contact the operating surface 54b of the ratchet member 54. Specifically, when the operating link 64 is moved by the first operating member 60, the pawl member 78 engages one of the grooves 54b₁ of the operating surface 54b to rotate the ratchet member 54 and the winding member 52 about the main fixing bolt 40. However, when the first operating member 60 and the operating link 64 are in a normal rest position, the pawl member 78 contacts the intermediate plate 36. In other words, the intermediate plate 36 is shaped and configured to hold the pawl member 78 out of engagement with the grooves 54b₁ of the operating surface 54b when the operating link 64 and the first operating member 60 are in their normal rest positions. Thus, if the second operating member 62 is actuated by the tap lever 73, e.g., if the retaining mechanism 30 is released as discussed below, the ratchet member 54 and the winding member 52 can rotate due to the urging force of the main biasing member 56.

The follower link 66 is pivotally coupled to the first operating member 60 and the secondary fixing bolt 42 via the spacer 63. A return biasing member (spring) 79 normally biases the follower link 66 to the rest position. Thus, the first operating member 60 and the first operating link 64 are also normally biased to the rest position by the return biasing member (spring) 79 since these members form three links of a four-bar linkage assembly.

Referring still to Figures 4 and 6-18, the retaining mechanism 30 will now be discussed in more detail. The retaining mechanism 30 basically includes a retaining pivot pin 80, a retaining biasing member 82 and a locking member or retaining pawl 84. The retaining pivot pin 80 is coupled to the base plate 34 and the intermediate plate 36. The locking member 84 is rotatably mounted on the retaining pivot pin 80. The retaining biasing member 82 normally biases the locking member 84 toward a predetermined position. The locking member 84 is arranged and configured to engage the positioning surface 54c of the ratchet member 54. Moreover, the locking member 84 is also arranged and configured to selectively engage the release flange 62c of the second operating member 62.

More specifically, the retaining pivot pin 80 has an upper end coupled to the base plate 34, and a lower end coupled to the intermediate plate 36. Thus, the retaining pivot pin 80 and the base plate 34 are non-movable relative to the main mounting portion 32. The locking member 84 is arranged on the lower end of the retaining pivot pin 80 adjacent the intermediate plate 36. The biasing member 82 has an upper end engaged with the base plate 34 and a lower end engaged with the locking member 84 to normally bias the locking member 84 in a predetermined direction.

The locking member 84 basically includes a first stop portion 84a, a second stop portion 84b, a central hole 84c, a spring receiving recess 84d and an actuating projection 84e. The lower end of the retaining pivot pin 80 is received in the hole 84c such that the locking member 84 is located between the base plate 34 and the intermediate plate 36. The first and second stop portions 84a and 84b are arranged on opposite lateral sides of the teeth 54c₁ of the ratchet member 54. The spring receiving recess 84d is configured to receive the lower end of the biasing member 82. The actuating projection 84e is arranged adjacent the release flange 62c of the second operating member 62 that is received in a guide opening of the intermediate plate 36.

When the second operating member 62 is actuated by the tap lever 73, the release flange 62c engages the actuating projection 84e to rotate the locking member 84 against the biasing force of the spring 82. This moves the first stop portion 84a out of engagement with the positioning surface 54c. Thus, the ratchet member 54 and the winding member 52 are rotated one shift position due to the biasing force of the main biasing member or spring 56. When the tap lever 73 is released, the locking member 84 rotates via the biasing force of the spring 82 to engage the next tooth of the positioning surface 54c to hold the ratchet member 54 and the winding member 52 in the desired shift position.

Operation of the front shift operating device 20 will now be discussed in more detail. When the rider wishes to shift the front derailleur 15 and the chain C from a smaller front sprocket FS to a larger front sprocket FS, the rider pushes the first operating member 60 with a thumb or finger. The first operating member 60 moves to the shift position. This movement of the first operating member 60 causes both the operating link 64 and the follower link 66 to rotate about the main and secondary fixing bolts 40 and 42, respectively. When the operating link 64 rotates about the main fixing bolt 40, the pawl mechanism 68 moves with the operating link 64.

When the pawl mechanism 68 moves, the pawl member 78 moves out of engagement with the intermediate plate 36. The pawl member 78 then engages the ratchet member 54 to rotate the ratchet member 54 and the winding member 52 one shift position. When the ratchet member is rotated from one shift position to the next adjacent shift position by the pawl mechanism 68, the locking member 84 is moved out of engagement with its respective tooth 54c₁ and into engagement with the next respective tooth 54c₁ or stop 54d. Specifically, as the ratchet member 54 moves between two shift positions, the locking member 84 disengages and then reengages the teeth 54c₁ to retain the ratchet member 54 in the next shift position.

When the first operating member 60 is released by the rider, the first operating member 60 moves back to its normal rest position. This movement of the first operating member 60 causes the operating link 64 and the follower link 66 to rotate about the main and secondary fixing bolts 40 and 42, respectively. The operating link 64 and the follower link 66 rotate until they return to their normal rest positions. The pawl mechanism 78 moves with the operating link 64. Thus, the pawl member 78 moves back into engagement with the intermediate plate 36 so that the pawl member 78 is out of engagement with the operating surface 54b of the ratchet member 54. However, the ratchet member 54 is retained in its shift position due to the locking member 84. If the rider desires to shift from a smaller front sprocket FS to a larger front sprocket FS again, the first operating member 60 is pushed again and the process described above is repeated.

If the rider desires to shift the front derailleur 15 and the chain C from a larger front sprocket FS to a smaller front sprocket FS, the rider pushes the tap lever 73 with a thumb or finger. When the tap lever 73 is actuated by the rider, the second operating member 62 moves from the normal rest position to the shift position. Specifically, movement of the second operating member 62 is controlled by the guide opening of the intermediate plate and the spacer 63, which is coupled to the secondary fixing bolt 42. When the second operating member 62 is moved to the shift position, the release flange 62c engages the locking member 84. The locking member 84 is rotated against the biasing force of the spring 82 out of engagement with one of the teeth 54c₁ or the stop 54d of the ratchet member 54. The ratchet member 54 can then rotate under the biasing force of the main biasing member or spring 56.

The locking member 84 will then engage the next adjacent tooth 54c₁ or stop 54d upon releasing the second operating member 62. Specifically, when the rider pushes the tap lever 73, the locking member 84 is disengaged from the teeth 54c₁. However, when the rider then releases the tap lever 73, the second operating member 62 will return to its normal rest position under the biasing force of the return spring 72. Thus, the release flange 62c will release the locking member 84. In other words, the second operating member 62 is designed to be tapped and released relatively quickly by the rider. The locking member 84 then non-rotatably engages the next adjacent tooth 54c₁ or stop 54d of the ratchet member 54 and the shift from the larger front sprocket FS to the smaller front sprocket FS is complete. This process can then be repeated by the rider if desired.

Of course, if the chain C is already on the smallest front sprocket FS, the stops between the locking member 84 and the ratchet member 54 will prevent disengagement with the teeth 54c₁. Therefore, if the rider pushes the tap lever 73 when the front derailleur 15 is positioned over the smallest front sprocket FS, a shift will not occur. Likewise, if the front derailleur 15 is in its top position such that the chain C is arranged on the largest front sprocket FS, the first operating member 60 cannot be shifted due to the stops between the locking member 84 and the ratchet member 54. Thus, a shift will not occur in this situation.

In the illustrated embodiment, the ratchet member 54, the locking member or retaining pawl 84 and the resilient coating 55 (buffering member) form parts of a positioning mechanism of the front shift operating device 20. Thus, one of the ratchet member 54 and the locking member 84 can be considered a first member of the positioning mechanism and the other of the ratchet member 54 and the locking member 84 can be considered a second member of the positioning mechanism. Moreover, the positioning surface 54c of the ratchet member 54 and the peripheral surface of the locking member 84 can be considered engagement surfaces contacting the resilient coating 55. The ratchet member 54 and the locking member 84 are arranged and configured to engage each other in response to manual operation each of the first and second operating members 60 and 62. Of course, it will be apparent to those skilled in the art from this disclosure that the positioning mechanism of the present invention could include additional and/or different parts as needed and or desired. The resilient coating 55 acts as a cushion between the ratchet member 54 and the locking member 84 to prevent direct contact between these members.

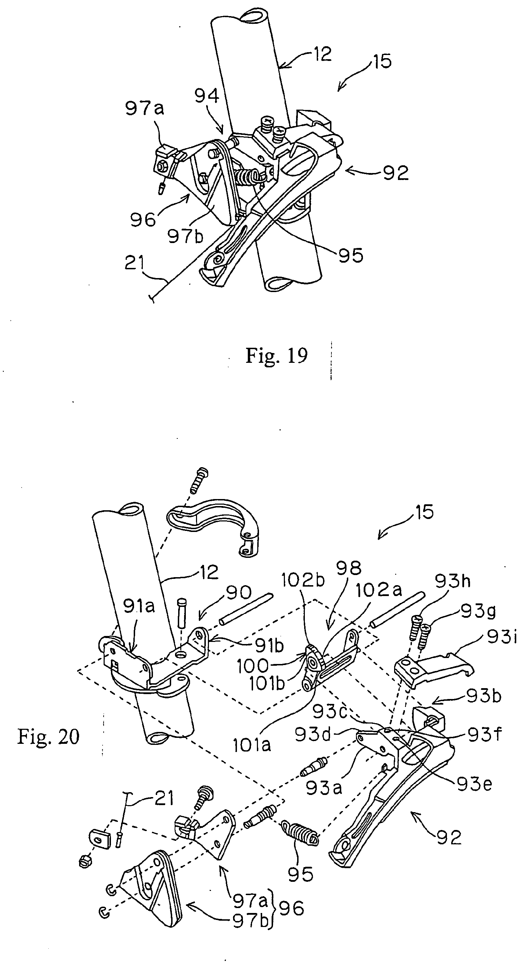

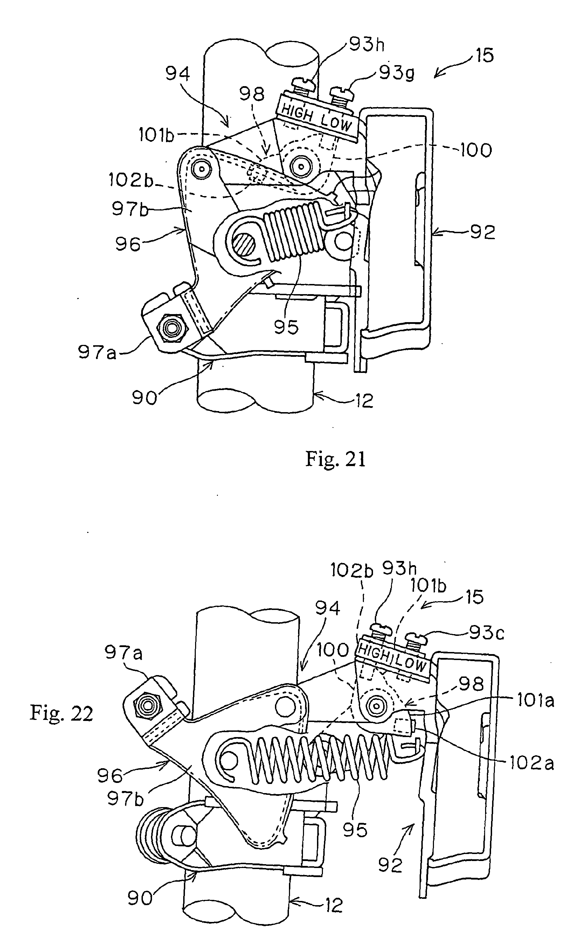

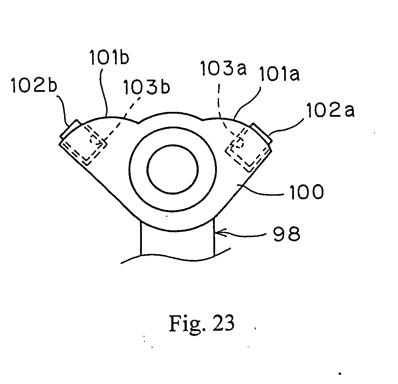

Referring now to Figures 19-23, the front derailleur 15 of the present invention will now be discussed in more detail. The front derailleur 15 of the present invention is constructed in accordance with U.S. patent No. 6,234,927, issued on May 22, 2001. Thus, the front derailleur 15 of the present invention operates in accordance with U.S. patent No. 6,234,927, except that the front derailleur 15 of the present invention is provided with a positioning mechanism that utilizes a special dampening feature of the present invention, as described below. Accordingly, the front derailleur 15 of the present invention will not be discussed and/or illustrated in detail herein, except as related to the positioning mechanism with the dampening feature in accordance with the present invention. In other words, it will be apparent to those skilled in the art from this disclosure that the front derailleur 15 of the present invention is identical to that disclosed and illustrated in U.S. patent No. 6,234,927, except as explained and illustrated herein.

Accordingly, the front derailleur 15 basically includes a fixed member 90, a chain guide 92 and a linkage assembly 94 coupled between the fixed member 90 and the chain guide 92. The fixed member 90 is located beneath the chain guide 92 and the linkage assembly 94 such that the chain guide 92 moves from a retracted (low gear) position to an extended (high gear) position. The linkage assembly 94 is preferably designed such that a biasing member (coil spring) 95 normally biases the chain guide 92 in a transverse direction towards the frame 12 of the bicycle 10.

When the linkage assembly 94 holds the chain guide 92 in its extended position, the chain guide 92 is located over the outermost front sprocket FS. Movements of the chain guide 92 and the linkage assembly 94 are controlled by the front shift operating device 20, as explained above. The fixed member 90 is preferably clamped directly to the seat post portion of the frame 12 in a conventional manner. As best seen in Figure 20, part of the fixed member 90 forms part of the linkage assembly 94.

The fixed member 90 has a pair of substantially parallel mounting flanges 91a and 91b that extend in substantially vertical directions. The mounting flanges 91 a and 91b are configured for mounting a portion of linkage assembly 94 thereto, as explained below. As explained below in more detail, the fixed member 90 forms one of the links (i.e., a non-movable link element) of the linkage assembly 94.

The chain guide 92 is preferably constructed of a hard rigid material. For example, the chain guide 92 is preferably constructed of metal such as a rigid sheet metal that is bent to the desired shape. The chain guide 92 has a chain receiving slot formed by a pair of vertical shift plates that are adapted to engage the chain C for laterally moving the chain C in a conventional manner. The chain guide 92 also has a pair of mounting flanges 93a and 93b extending in a substantially horizontal direction for coupling the linkage assembly 94 thereto. The mounting flange 93a forms one of the links (i.e., a movable link element) of the linkage assembly 94 that is fixedly, non-movably coupled with the chain guide 92. More specifically, the mounting flange 93a has a substantially horizontal section 93c and a substantially vertical section 93d. The horizontal section 93c has a pair of threaded holes 93e and 93f for receiving adjustment screws 93g and 93h thereto. Adjustment screw 93g is a low position adjustment screw, while adjustment screw 93h is a high position adjustment screw. The adjustment screws 93g and 93h engage a portion of linkage assembly 94 as discussed below for controlling the range of movement of chain guide 92. In other words, by individually adjusting the axial extension of adjustment screws 93g and 93h relative to horizontal section 93c, the retracted (low gear) position and the extended (high gear) position of chain guide 92 are adjusted independently of each other.

A top cover 93i is provided to overlie the mounting flanges 93a and 93b. The top cover 93i is preferably a non-metallic or plastic member that has a pair of bores that are initially formed with diameters that are slightly smaller than the thread diameters of the adjustment screws 93g and 93h. Accordingly, when the adjustment screws 93g and 93h are threaded into the cover 93i, the non-metallic material is cut or tapped to form internal threads to create a friction fit between top cover 93i and the adjustment screws 93g and 93h. Accordingly, the adjustment screws 93g and 93h will typically not rotate unless the screws 93g and 93h are manually adjusted by a person.

The linkage assembly 94 is preferably a four-bar linkage assembly having an inner link 96, an outer link 98, a fixed lower link (i.e., the fixed member 90) and a movable upper link (i.e., the mounting flange 93a of the chain guide 92). The inner link 96 is preferably constructed of two main parts, while the outer link 98 is preferably constructed of a single part. Specifically, the inner link 96 includes a cable attachment member 97a and a cable guide adapter 97b. The cable attachment member 97a and the cable guide adapter 97b are preferably fixedly coupled together. The inner link 96 is pivotally coupled to the mounting flange 91 a of the fixed member 90 and the mounting flange 93a of the chain guide 92. The outer link 98 is pivotally coupled to the mounting flanges 91a and 91b of the fixed member 90, and pivotally coupled to the mounting flanges 93a and 93b of the chain guide 92.

The cable attachment member 97a has a conventional wire clamp for attaching the inner wire of cable 21 thereto. The cable guide adapter 97b is substantially triangular shaped and can optionally be removed if the shift cable 21 is a top-pull type extending downwardly along the frame 12 of the bicycle 10 to the front derailleur 15. In other words, the cable guide adapter 97b is utilized on the front derailleur 15 when it is desirable to have the shift cable 21 located below the front derailleur 15. Accordingly, cable guide adapter 97b guides the inner wire of the shift cable 21 around the edge of cable guide adapter 97b and then downwardly to the point where cable 21 is coupled to the bicycle frame 12, as best seen in Figure 19.

The upper end of the outer link 98 is provided with a fan-shaped member 100 that engages the adjustment screws 93g and 93h for limiting movement of chain guide 92 between its retracted position and its extended position. More specifically, fan member 100 is provided with a low stopping surface (engagement surface) 101a, a high stopping surface (engagement surface) 101b and a pair of buffering elements 102a and 102 b extending from the stopping surfaces 101a and 101b, respectively, as best seen in Figures 20-22. The low stopping surface 101a with the buffering element 102a is designed to engage the free end of low adjustment screw 93g, while high stopping surface 101b with the buffering element 102b is positioned to engage the high adjustment screw 93h.

The buffering elements 102a and 102b are preferably cylindrical members that are partially received in a pair of recesses 103a and 103b (such as by press-fitting) of the fan member 100. The buffering elements 102a and 102b are arranged and configured to selectively contact the free ends of the adjustment screws 93g and 93h. Thus, the free ends of the adjustment screws 93g and 93h form engagement surfaces. The buffering elements 102a and 102b are preferably somewhat compressible resilient members that include an elastomeric material that is not only a shock absorbing material, but also a sound deadening material. Such materials are well known. In other words, the resilient buffering elements 102a and 102b eliminate/reduce abrupt, direct contact between members (i.e., absorbs shock), and thus, eliminate/reduce audible sounds (such as a "click" sound at the end shift positions) caused by such direct contact.

The outer link 98 (with the fan member 100), the movable link (i.e., the mounting flange 93a of the chain guide 92 with the adjustment screws 93g and 93h) and the resilient buffering elements 102 (buffering member) form parts of a positioning or adjustment mechanism of the front derailleur 15. The pair of buffering elements 102a and 102b form a buffering member. Thus, one of the outer link (with the fan member 100) and the movable link (i.e., the mounting flange 93a with the adjustment screws 93g and 93h) can be considered a first member of this positioning mechanism and the other of the outer link (with the fan member 100) and the movable link (i.e., the mounting flange 93a with the adjustment screws 93g and 93h) can be considered a second member of this positioning mechanism. Moreover, the free ends of the adjustment screws 93g and 93h can be considered engagement surfaces contacting the resilient buffering elements 102a and 102b. The outer link (with the fan member 100) and the movable link (i.e., the mounting flange 93a with the adjustment screws 93g and 93h) are arranged and configured to engage each other in response to manual operation of the front shift operating device 20. The resilient buffering elements 155 act as cushions between the chain guide 92 (movable link element) and the outer link 98 to prevent direct contact between these members. Of course, it will be apparent to those skilled in the art from this disclosure that the positioning mechanism of the present invention could include additional and/or different parts as needed and or desired.

### REAR SHIFT OPERATING DEVICE

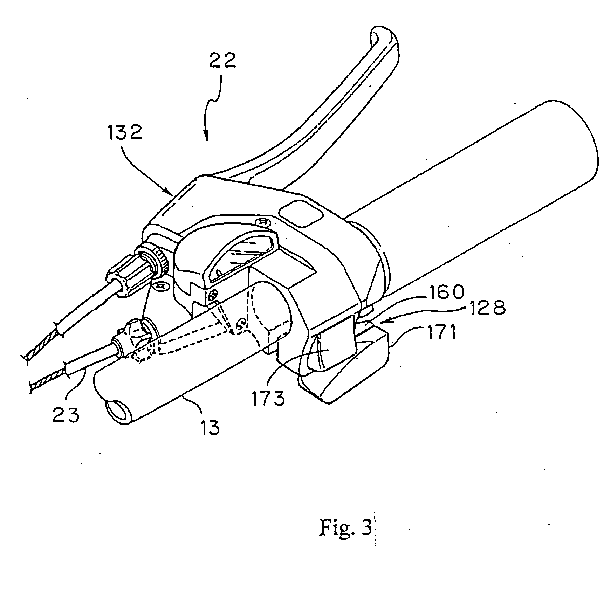

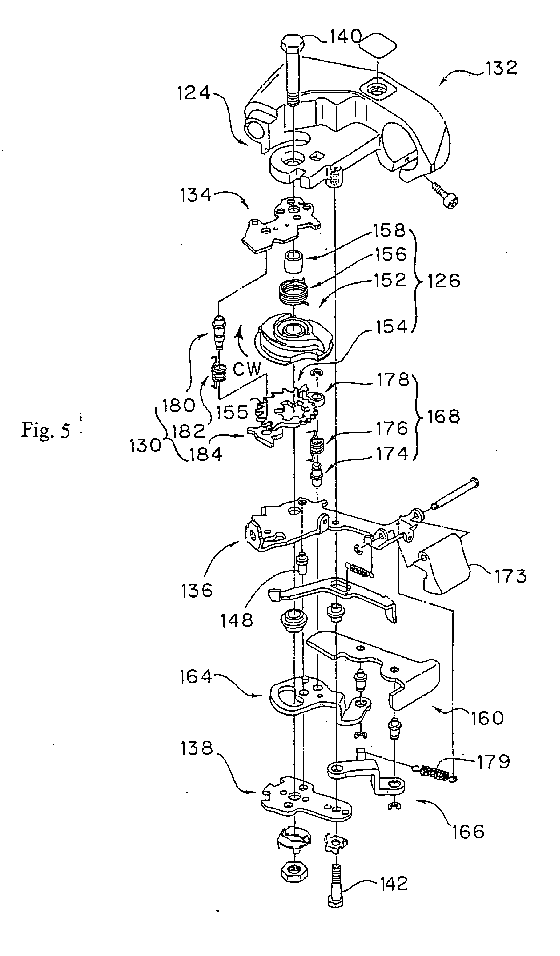

Referring now to Figures 3 and 5, the rear (second) shift operating device 22 will now be discussed in more detail. The rear shift operating device is constructed and operates in accordance with U.S. patent application No. 10/041,557 as mentioned above, except the rear shift operating device 22 includes a ratchet member 154 with a resilient coating 155 applied thereto. The resilient coating 155 is identical to the resilient coating 55 of the front shift operating device 20, except the resilient coating 155 has a different shape to the modified shape of the ratchet member 154. Thus, the rear shift operating device 22 is substantially identical to the front shift operating device 20 except that certain parts of the rear shift operating device have been modified so that the rear shift operating device 22 has more shift positions than the front shift operating device 20. Specifically, the rear shift operating device 22 is designed to include more shift positions than the front shift operating device 20 because the rear derailleur 17 has more shift positions than the front derailleur 15. Accordingly, it will be apparent to those skilled in the art from this disclosure that the descriptions and illustrations of the front shift operating device 20 also apply to the rear shift operating device 22.

In view of the above, and for the sake of brevity, parts of the rear shift operating device 22 of the present invention that are functionally identical to parts of the front shift operating device 20 of the present invention will be given like reference numerals, but with "100" added thereto. Moreover, in view of the above, and for the sake of brevity, the rear shift operating device 22 of the present invention will not be discussed and/or illustrated in detail herein. Rather, it will be apparent to those skilled in the art from this disclosure that the rear shift operating device of the present invention is identical to the rear shift operating device of U.S. patent application No. 10/041,557, except that the rear shift operating device 22 of the present invention includes a resilient coating 155 substantially identical to the resilient coating 55.

The rear shift operating device 22 basically includes a mounting assembly 124, a winding mechanism 126, an operating mechanism 128 and a retaining mechanism 130 coupled together to shift the rear derailleur 17 and the chain C of the drive train or transmission 14 between the rear sprockets RS. In the illustrated embodiment, the transmission 14 preferably has more than three rear sprockets RS coupled thereto. More specifically, in the illustrated embodiment, the transmission preferably has nine rear sprockets RS. Thus, the rear shift operating device 22 also preferably has more than three shift positions. More specifically, the rear shift operating device 22 preferably has nine shift positions. In any event, the rear shift operating device 22 preferably has a number of shift positions that corresponds to the number of shift positions of the rear derailleur 17. Of course, it will be apparent to those skilled in the art from this disclosure that the rear derailleur 17 and the rear shift operating device 22 could be designed with a different number of shift positions if needed and/or desired.

The winding mechanism 126, the operating mechanism 128 and the retaining mechanism 130 are coupled to the mounting assembly 124. The winding mechanism 126 is controlled by the operating mechanism 128 and the retaining mechanism 130 to selectively maintain the rear derailleur 17 in one of a plurality of shift positions via the control cable 23. More specifically, the operating mechanism 128 and the retaining mechanism 130 control rotation of the winding mechanism 126 to selectively retain the winding mechanism 126 in one of the plurality of shift positions. Thus, the inner wire of the control cable 23 and the rear derailleur 17 are also selectively retained in one of a plurality of shift positions. The inner wire of the rear control cable 23 is coupled to the winding mechanism 126 such that rotation of the winding mechanism 126 takes-up or lets-out the inner wire of the control cable 23 to actuate/move/shift the rear derailleur 17 between the rear sprockets RS.

The mounting assembly 124 basically includes a plurality of fixed members coupled together to form a shift operating device housing that supports the winding mechanism 126, the operating mechanism 128 and the retaining mechanism 130. More specifically, the mounting assembly 124 basically includes a main mounting portion 132, a base plate 134, an intermediate plate 136 and a lever retaining plate 138. The base plate 134, the intermediate plate 136 and the lever retaining plate 138 are basically fixedly coupled to the main mounting portion 132 by a main fixing bolt 140 (first fixed pivot axle) and a secondary fixing bolt 142 (fixed pivot axle) that are preferably parallel to each other to form the shift operating device housing. Various other parts of the rear shift operating device 22 (i.e., parts of the winding mechanism 126, operating mechanism 128 and retaining mechanism 130) are either movably or non-movably coupled to the mounting assembly 124, as discussed below in more detail.

The winding mechanism 126 is mounted on the main fixing bolt 140 between the base plate 134 and the intermediate plate 136 of the mounting assembly 124. The winding mechanism 126 basically includes a cable winding member 152, a ratchet member 154, a main biasing member 156 and a unit spacer 158. In the illustrated embodiment, the winding member 152 and the ratchet member 154 are preferably separate members that are non-rotatably coupled together. The main biasing member 156 is preferably a torsion spring that normally biases the winding member 152 and the ratchet member 154 in a predetermined rotational direction, e.g., the clockwise direction CW as seen in Figure 5. The winding mechanism 126 is operatively coupled to the operating mechanism 128 and the retaining mechanism 130 to selectively retain the winding member 152 in one of a plurality of shift positions.

The operating mechanism 128 is a modified version of the operating mechanism 28 in order to accommodate the larger number of shift positions of the ratchet member 54 as explained below. The operating mechanism 128 basically includes a first operating member 160, a second operating member 162, an operating link 164 and a follower link 166. The first operating member 160 together with the operating link 164, the follower link 166 and the mounting assembly 124 form a four-bar linkage that controls movement of the first operating member 160. More specifically, the first operating member 160 is pivotally coupled to both the operating link 164 and the follower link 166. The operating link 164 is pivotally coupled on a pivot pin 148 (second fixed pivot axle) and operatively coupled on the main fixing bolt 140, while the follower link 166 is pivotally coupled to the secondary fixing bolt 142 (fixed pivot axle). A return biasing member (spring) 179 normally biases the follower link 166 to the rest position. A button 171 is preferably coupled to the first operating member 160, while a tap lever 173 is operatively coupled to the second operating member 162.

The operating link 164 preferably has a pawl mechanism 168 operatively coupled thereto. The pawl mechanism 168 is configured to engage the ratchet member 154 when the first operating member 160 is pushed or moved by the rider from the normal rest position to the shift position. The pawl mechanism 168 basically includes a pawl pivot pin 174, a pawl spring 176 and a pawl member 178. The pawl member 178 is mounted on the upper end of the pawl pivot pin 174 with the pawl spring 176 normally biasing the pawl member 178 relative to the operating link 164.

The retaining mechanism 130 basically includes a retaining pivot pin 180, a retaining biasing member 182 and a locking member 184. The retaining pivot pin 180 is coupled to the base plate 134 and the intermediate plate 136. The locking member 184 is rotatably mounted on the retaining pivot pin 180. The retaining biasing member 182 normally biases the locking member 184 toward a predetermined position. The locking member 184 is arranged and configured to engage the positioning surface 154c of the ratchet member 154. Moreover, the locking member 184 is also arranged and configured to selectively engage the second operating member 162. The ratchet member 154 has the resilient coating 155 applied thereto in a manner identical to the front shift operating device 20. Of course, it will be apparent to those skilled in the art from this disclosure that the positioning mechanism of the present invention could include additional and/or different parts as needed and or desired.

### SECOND EMBODIMENT

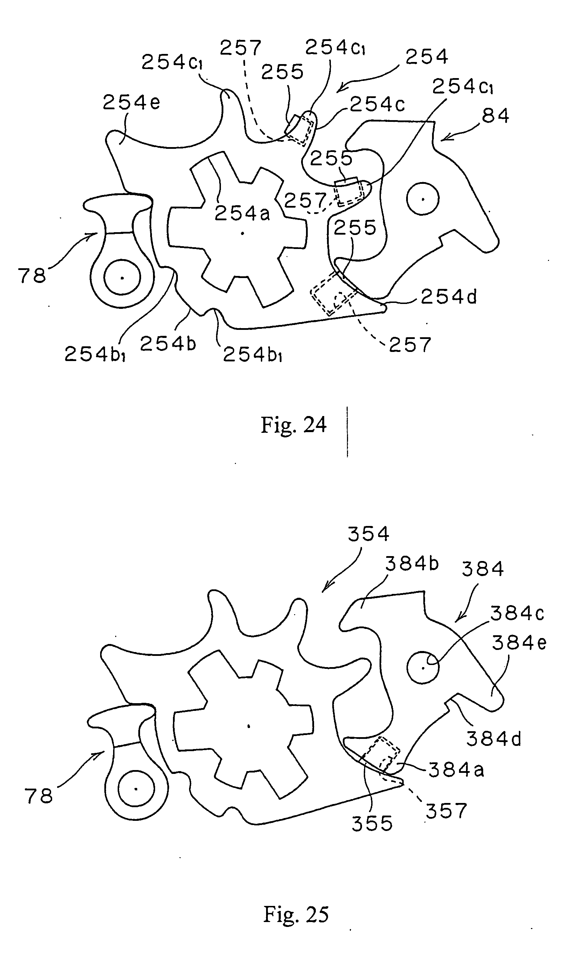

Referring now to Figure 24, a modified positioning mechanism in accordance with a second embodiment of the present invention will now be explained. The positioning mechanism of this second embodiment is identical to the positioning mechanism of the first embodiment, except that the positioning mechanism of this second embodiment includes a modified ratchet member 254 with a plurality of buffering elements 255 coupled thereto, in place of the resilient coating 55 of the ratchet member 54 of the first embodiment. Thus, the positioning mechanism of this second embodiment basically includes the ratchet member 254, a locking member or positioning/retaining pawl (element) 84 and buffering member that includes the plurality of buffering elements 255.

The positioning mechanism of this second embodiment is designed to be used in the front shift operating device 20 of the first embodiment to form a modified bicycle component (i.e. the modified ratchet member 254 is designed to be used in place of the ratchet member 54 in the front shift operating device 20 of the first embodiment). Since the remaining parts of such a modified bicycle component are identical to the first embodiment, it will be apparent to those skilled in the art from this disclosure that the descriptions and illustrations of the first embodiment also apply to this second embodiment, except as explained and illustrated herein. Moreover, in view of the similarity between the first and second embodiments, the parts of the second embodiment that are identical to the parts of the first embodiment will be given the same reference numerals as the parts of the first embodiment.

The ratchet member 254 basically includes a splined central opening 254a, an outer operating surface 254b and an outer positioning surface 254c. The ratchet member 254 is designed to rotate with the winding member 52 as if they were a single piece. The operating surface 254b is configured to engage a portion of the operating mechanism 28 (i.e., the pawl member 78). More specifically, the operating surface 254b includes a plurality (three) of grooves 254b₁ designed to selectively engage the pawl member 78. The positioning surface 254c is configured to engage a portion of the retaining mechanism 30 (i.e. the locking member 84) to selectively hold and retain the ratchet member 254 and the winding member 52 in one of the plurality of shift positions. More specifically, the positioning surface 254c includes a plurality (three) of projections or teeth 254c₁, which engage the locking member 84. The ratchet member 254 also preferably includes a pair of stops 254d and 254e. Specifically, the stop 254d is a rest stop while the stop 254e is a fully shifted stop. The stops 254d and 254e selectively engage portions of the retaining mechanism 30 to control movements of the winding member 52 and the ratchet member 254.

The stop 254d and two of the teeth 254c₁ each have a recess 257 formed therein with one of the cylindrical buffering elements 255 partially received therein such as by press fitting (i.e., in a manner identical to the buffering elements 102a and 102b of the front derailleur 15). The ratchet member 254 is identical to the ratchet member 54, except, the resilient coating has been eliminated in the ratchet member 254 and the buffering elements 255 have been mounted in the recesses 257. The resilient buffering elements 255 act as cushions between the ratchet member 254 and the locking member 84 to prevent direct contact between these members. The material of the buffering elements 255 is preferably identical to the material of the resilient coating 55 of the first embodiment. Of course, it will be apparent to those skilled in the art from this disclosure that the positioning mechanism of the present invention could include additional and/or different parts as needed and or desired.

### THIRD EMBODIMENT

Referring now to Figure 25, a modified positioning mechanism in accordance with a third embodiment of the present invention will now be explained. The positioning mechanism of this third embodiment is identical to the positioning mechanism of the first embodiment, except that the positioning mechanism of this second embodiment includes a modified ratchet member 354 and a modified locking member 384 with a buffering elements 355 coupled thereto. Thus, the positioning mechanism of this third embodiment basically includes the ratchet member 354, the locking member or positioning/retaining pawl (element) 384 and a buffering member that includes the buffering element 355.

The positioning mechanism of this third embodiment is designed to be used in the front shift operating device 20 of the first embodiment to form a modified bicycle component (i.e. the modified ratchet member 354 and the modified locking member 384 are designed to be used in place of the ratchet member 54 and locking member 84 in the front shift operating device 20 of the first embodiment). Since the remaining parts of such a modified bicycle component are identical to the first embodiment, it will be apparent to those skilled in the art from this disclosure that the descriptions and illustrations of the first embodiment also apply to this third embodiment, except as explained and illustrated herein. Moreover, in view of the similarity between the first and third embodiments, the parts of the third embodiment that are identical to the parts of the first embodiment will be given the same reference numerals as the parts of the first embodiment.

The ratchet member 354 is identical to the ratchet member 54, except, the resilient coating has been eliminated in the ratchet member 354. Thus, the ratchet member 354 will not be discussed in further detail herein.

The locking member 384 basically includes a first stop portion 384a, a second stop portion 384b, a central hole 384c, a spring receiving recess 384d and an actuating projection 384e. The first and second stop portions 384a and 384b are arranged on opposite lateral sides of the teeth of the ratchet member 354. The first stop portion 384a has a recess 357 formed therein with one cylindrical buffering element 355 partially received therein such as by press fitting (i.e., in a manner identical to the buffering elements 102a and 102b of the front derailleur 15). The material of the buffering elements 355 is preferably identical to the material of the resilient coating 55 of the first embodiment. The locking member 384 is identical to the locking member 84 of the first embodiment except for the presence of the recess 357 with the buffering element 355 received therein. The resilient buffering element 355 acts as a cushion between the ratchet member 354 and the locking member 384 to prevent direct contact between these members. Of course, it will be apparent to those skilled in the art from this disclosure that the positioning mechanism of the present invention could include additional and/or different parts as needed and or desired.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle component comprising:
an operator actuating member configured and arranged to be manually operated; and
a positioning mechanism mechanically coupled to said operator actuating member, said positioning mechanism including
first and second members arranged and configured to engage each other in response to manual operation of said operator actuating member, and
a buffering member mounted to at least one said first and second members in an area such that said buffering member is contacted between first and second engagement surfaces of said first and second members, respectively.

2. The bicycle component according to claim 1, wherein
said buffering member is a coating applied to at least one of said first and second members and arranged to prevent direct contact between said first and second members.

3. The bicycle component according to claim 1 or 2, wherein
at least one of said first and second members has a recess with said buffering member mounted therein, said buffering member extending slightly out of said recess to prevent direct contact between said first and second members.

4. The bicycle component according to any one of claims 1 to 3, wherein
said buffering member includes an elastomeric material.

5. The bicycle component according to any one of claims 1 to 4, wherein
said buffering member includes a shock absorbing material.

6. The bicycle component according to any one of claims 1 to 5, wherein
said buffering member includes a plurality of separate buffering elements.

7. The bicycle component according to any one of claims 1 to 6, wherein
one of said first and second members of said positioning mechanism includes a ratchet element and the other of said first and second members includes a pawl element configured to engage said ratchet element.

8. The bicycle component according to claim 7, wherein
said one of said first and second members with said ratchet element includes a winding element configured to receive an inner wire of a bicycle control cable, and
said pawl element is operatively coupled to said operator actuating member to selectively release said winding element upon moving said operator actuating member.

9. The bicycle component according to any one of claims 1 to 8, wherein
one of said first and second members of said positioning mechanism includes a first linkage element, and the other of said first and second members includes a second linkage element, in particular one of said first and second linkage elements having a chain guide coupled thereto.

10. The bicycle component according to claim 9, wherein
one of said first and second linkage elements has a pair of adjustment screws threadedly coupled thereto, and the other of said first and second linkage elements has a pair of abutment surfaces arranged to selectively engage said adjustment screws.
